# EUROPEAN PATENT APPLICATION

(11) **EP 4 358 235 A1**
(43) Date of publication of application: **24.04.2024**
(21) Application number: 22202142.0
(22) Date of filing: 18.10.2022
(51) Int. Cl.: H01M 10/613, H01M 10/6556, H01M 50/213

(54) **COOLING ARRANGEMENT FOR AN ELECTRICAL STORAGE SYSTEM**

(71) Applicant: VOLVO TRUCK CORPORATION, 405 08 Göteborg (SE)
(72) Inventor: BHAVANI SHANKAR, Vijai Shankar, SE-414 78 GÖTEBORG (SE)
(74) Representative: Kransell & Wennborg KB

(57) **Abstract**

The present disclosure relates to a cooling arrangement (1) for an electrical storage system (2), the cooling arrangement (1) comprising an inlet conduit (15) via which a first coolant (9) is supplied to the cooling arrangement (1) and deposited via one or more openings (15a-c) of the inlet conduit (15) into a cooling arrangement enclosure (4) for setting the first coolant (9) into direct contact with at least one battery cell (3) accommodated within the enclosure (4), the inlet conduit (15) extending along a side of the enclosure (4) and a coolant channel (14) carrying a second coolant (13), the coolant channel (14) being configured to be in thermal contact with the at least one battery cell (3), a coolant channel inlet (11) of the coolant channel (14) being arranged at an opposite side of the enclosure (4) in relation to the inlet conduit (15), wherein the flow direction of the second coolant (13) at the coolant channel inlet (11) is configured to be orthogonal to a flow direction of the first coolant (9) exiting said one or more openings (15a-c).

## Description

### TECHNICAL FIELD

The disclosure relates generally to a cooling arrangement. In particular aspects, the disclosure relates to a cooling arrangement for an electrical storage system. The disclosure can be applied in heavy-duty vehicles, such as trucks, buses, and construction equipment. Although the disclosure may be described with respect to a particular vehicle, the disclosure is not restricted to any particular vehicle. The disclosure could further be applied to stationary electrical storage systems, or to electrical storage systems in aviation or marine applications.

### BACKGROUND

An electrical storage system stores energy for subsequent use. One example of an electrical storage system is a battery, such as a rechargeable battery for an electric vehicle.

Electrical storage systems may comprise battery cells for storing of energy in chemical bonds. During charging and recharging of the electrical storage system, the battery cells produce heat. To avoid damage and improve performance of the electrical storage system, a cooling arrangement may be used to cool the battery cells.

One previously known cooling method is immersion cooling. During immersion cooling the battery cells are immersed in a cooling liquid for cooling the cells through direct contact.

Another known method is cold-plate cooling. During cold-plate cooling, the battery cells are put into contact with a plate, the plate comprising a coolant channel for transporting the coolant into thermal contact with the battery cells.

Both of these previously known solutions come with limitations. While immersion cooling provides greater thermal contact with all sides of the battery cells, and thereby achieves a more homogenous cooling within each battery cell, the method may demand a large amount of pump power to provide a sufficiently high flow rate for achieving proper cooling of all battery cells and to reduce spatial thermal variation between different cells in the system.

The cooling plate transports the coolant in a channel physically separated from the battery cells and may require less pump power to achieve homogenous cooling among the battery cells but may instead result in inhomogeneous temperature distribution within the battery cells as they are typically cooled from one direction only.

The present disclosure relates to a cooling arrangement for an electrical storage system which may remediate some of these problems.

### SUMMARY

According to a first aspect of the disclosure, a cooling arrangement for an electrical storage system is provided, the cooling arrangement comprising an inlet conduit via which a first coolant is supplied to the cooling arrangement and deposited via one or more openings of the inlet conduit into a cooling arrangement enclosure for setting the first coolant into direct contact with at least one battery cell accommodated within the enclosure, the inlet conduit extending along a side of the enclosure. The cooling arrangement further comprising a coolant channel carrying a second coolant, the coolant channel being configured to be in thermal contact with the at least one battery cell. A coolant channel inlet of the coolant channel being arranged at an opposite side of the enclosure in relation to the inlet conduit and the flow direction of the second coolant at the coolant channel inlet being configured to be orthogonal to a flow direction of the first coolant exiting said one or more openings.

The first aspect of the disclosure may seek to solve the problem of reducing cooling arrangement pump power while still achieving homogeneous cooling of the battery cells.

By providing the cooling arrangement with two separate coolants and by arranging the inlets of these coolants opposite to each other with respect to the enclosure and the battery cells enclosed therein, the two separate coolants will cooperate to provide a more homogenous cooling of the at least one battery cell, as the arrangement allows the two separate coolants to move in opposite and orthogonal directions, thus compensating for the successively decreased cooling effect of the coolants due to heat exchange with the battery cells.

Furthermore, the combination of indirect cooling and direct cooling could further improve the cooling capabilities. As the indirect cooling may cool the at least one battery cell from a specific direction, such as from below, while the direct cooling partly or entirely immerses the at least one battery cell in coolant, different cooling properties are archived.

When the coolant is allowed to come into direct contact with the at least one battery cell, a more homogenous cooling within the battery cell may be achieved, as the battery cell may be cooled from several directions. The indirect cooling allows the one or more battery cells to be cooled using a lower flow rate, as the coolant of the indirect cooling is not physically hindered by the battery cells.

A technical benefit may thus include a cooling arrangement with more homogenous cooling and with lowered pumping demands.

In some examples, the first coolant is supplied to the inlet conduit at an inlet point, the inlet point being arranged diagonally from the coolant channel inlet of the coolant channel, with respect to a bottom section of the enclosure. A technical benefit might be that a more homogenous cooling of the at least one battery cell may be achieved.

In some examples, the first coolant is disposed from the cooling arrangement at a coolant outlet point and the second coolant is disposed from the cooling arrangement at a channel coolant outlet.

In some examples, the cooling arrangement is configured to immerse the entire at least one battery cell with the first coolant. A technical benefit may include a more homogenous cooling within the battery cells.

In some examples, the inlet conduit is arranged at a bottom section of the enclosure.

In some examples, the coolant outlet point is connected to an outlet conduit, the outlet conduit extending substantially horizontally along a side of the enclosure. A technical benefit may include that the first coolant is more evenly distributed into the disclosure. A technical benefit may include an efficient dispose of the coolant from the cooling arrangement.

In some examples, the outlet conduit is arranged at a top section of the enclosure.

In some examples, the coolant channel comprises a copper tube. A technical benefit may include a good thermal exchange between the coolant channel and the battery cells of the electrical storage system.

In some examples, the coolant channel is arranged inside a cooling plate. A technical benefit may include that a more even thermal distribution of coolant could be achieved.

In some examples the cooling plate is configured to form a bottom of the enclosure. A technical benefit may include a cooling arrangement with less components and better heat exchange.

In some examples the at least one battery cell is affixed to the top of the cooling plate.

In some examples the first coolant is a dielectric fluid. A technical benefit may include that good insulating properties can be achieved.

In some examples, the enclosure comprises polycarbonate.

According to a second aspect of the disclosure, an electrical storage system comprising the proposed cooling arrangement is provided.

According to a third aspect of the disclosure, a vehicle comprising the proposed electrical storage including the proposed cooling arrangement is provided.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein. There are also disclosed herein control units, computer readable media, and computer program products associated with the above discussed technical benefits.

### BRIEF DESCRIPTION OF THE DRAWINGS

With reference to the appended drawings, below follows a more detailed description of aspects of the disclosure cited as examples.
**FIG. 1** is a perspective view of an exemplary cooling arrangement
**FIG. 2** is a top view an exemplary cooling arrangement along section S1 in fig. 1
**FIG. 3** is a schematic top view of an exemplary cooling arrangement showing the coolant flows within the arrangement
**FIG. 4** is an alternative embodiment of a cooling arrangement of the present disclosure
**FIG. 5** is a further alternative embodiment of a cooling arrangement of the present disclosure

### DETAILED DESCRIPTION

Aspects set forth below represent the necessary information to enable those skilled in the art to practice the disclosure.

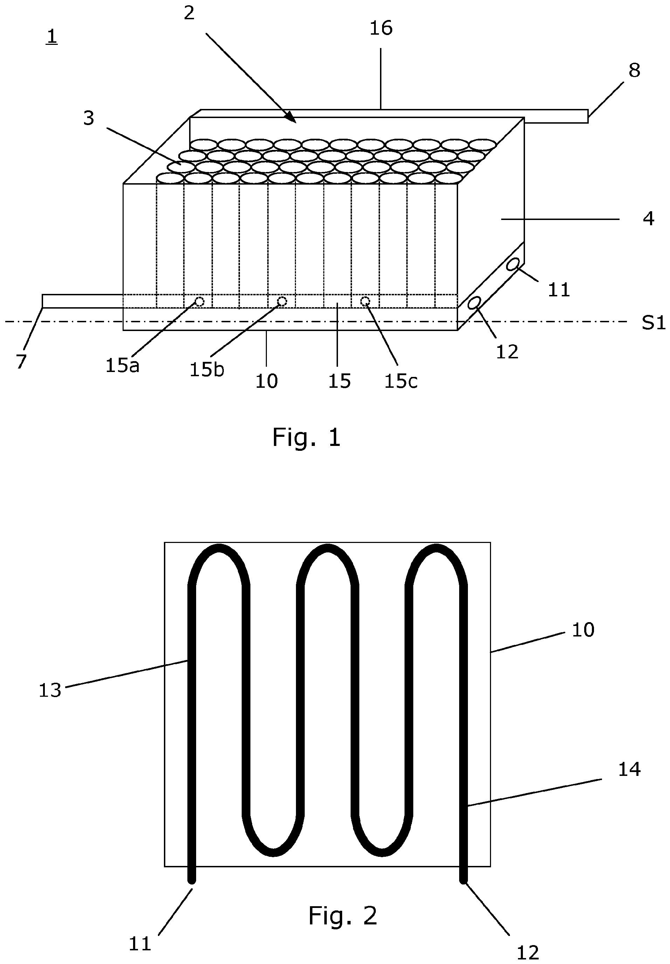

**FIG. 1** is an exemplary cooling arrangement **1** in accordance with the present disclosure. The cooling arrangement **1** is illustrated in relation to an electrical storage system **2.** The electrical storage system **2** comprises a plurality of battery cells **3** for storing of energy in chemical bonds. The battery cells **3** have a cylindrical form and are closely stacked together to form the electrical storage system **2.** The disclosure is not limited to any specific form or number of battery cells **3.** The battery cells **3** are in **FIG. 1** accommodated within an enclosure **4.** The enclosure **4** keeps the battery cells **3** together and protects the battery cells **3.** The enclosure **4** could according to one example comprise polycarbonate.

The cooling arrangement exemplified in **FIG. 1** further comprises a coolant inlet point **7** and a coolant outlet point **8.** The coolant inlet point **7** is connected to an inlet conduit **15** extending along a bottom side of the enclosure **4.** The inlet conduit **15** comprises at least one opening, in **FIG.1** illustrated as three openings **15a-c,** for depositing a first coolant **9** into direct contact with the battery cells **3.** The coolant inlet point **7** is in turn connected to a first coolant supply (not shown). The coolant outlet point is connected to an outlet conduit **16.**

As the first coolant **9** is supplied at a bottom section of the electrical storage system **2,** it rises within the enclosure **4** and thereby successively immerses the battery cells **3** with the first coolant **9.** As the first coolant **9** reaches a certain level it flows into the outlet conduit **16** at the top section of the enclosure **4** from where it can be transported away from the cooling arrangement **1** via the coolant outlet point **8.** The first coolant 9 could immerse the battery cells **3** partly or entirely depending on the placement of the outlet conduit **16.**

**FIG. 1** further illustrates a cooling plate **10** arranged at a lower section of the enclosure **4.** The cooling plate **10** comprises a coolant channel inlet **11** and a coolant channel outlet **12.** The coolant channel inlet **11** and the coolant channel outlet **12** are in **FIG. 1** illustrated as being arranged on a same side of the cooling plate **10** but might as well be arranged at opposite sides of the cooling plate **10.** The coolant channel inlet **11** and the coolant channel outlet **12** are connected to external conduits (not shown) for feeding a second coolant **13** into the cooling arrangement **1** and for leading the second coolant **13** away from the cooling arrangement **1.**

The cooling plate **10** could be installed in other ways in relation to the battery cells 3 of the electrical storage system **2,** such as at an upper side of the electrical storage system **2,** on top of the battery cells **3.**

**FIG. 2** shows an exemplary cooling arrangement along section S1. In **FIG. 2****,** the inside of the cooling plate **10** is clearly shown. The cooling plate **10** shown in **FIG. 2** comprises an interior channel **14** for transporting the second coolant **13.** The coolant channel **14** in **FIG. 2** comprises a copper pipe which extends across the cooling plate **10** to achieve thermal exchange with the battery cells **3** within the battery storage system **2.** Other configurations, patterns or materials of the coolant channel **14** may be envisaged. For example, the cooling plate **10** could comprise a number of parallel coolant channels **14** extending from the coolant channel inlet **11** and converging towards the coolant channel outlet **12.**

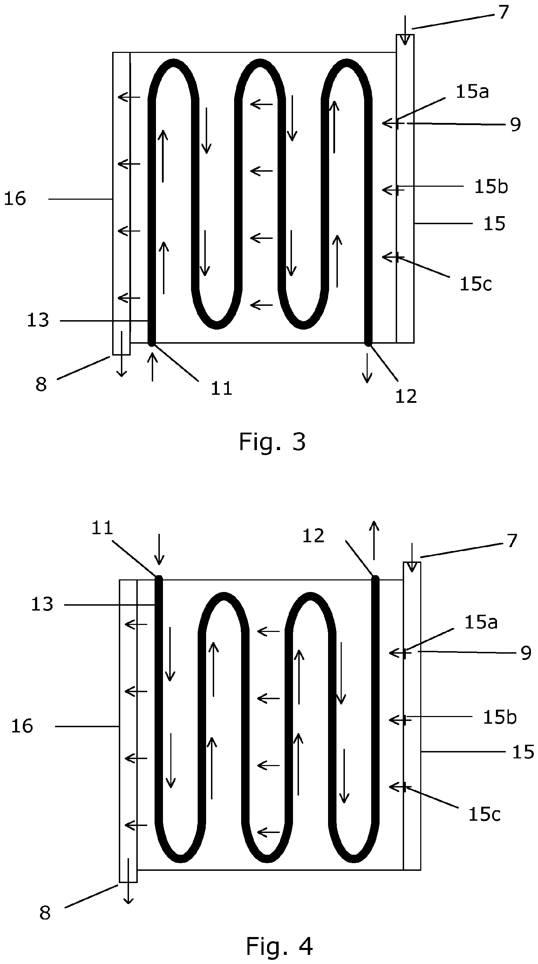

**FIG. 3** is an exemplary cooling arrangement **1** illustrated in a schematic top view. The figure schematically illustrates the flow of the first coolant **9** and the second coolant **13** within the cooling arrangement **1,** the flows of the first coolant **9** and the second coolant **13** being illustrated with arrows. The first coolant **9** is deposited to the battery cells via the openings **15a-c** of the coolant conduit **15** and is allowed to successively immerse the battery cells **3** until it reaches the first outlet conduit **16.** The second coolant **9** is supplied to the cooling plate **10** via the coolant channel inlet **11** and transported through the coolant channel **14** in thermal contact with the battery cells **3,** until it is disposed at the coolant channel outlet **12.** In **FIG. 3****,** the coolant conduit **15** is arranged at an opposite side of the electrical storage system with respect to the coolant channel inlet **11.** Furthermore, the coolant inlet point **7** is in **FIG. 3** arranged at the opposite side of the coolant channel inlet **11** in two directions with regards to the bottom of the enclosure **4,** in other words diagonally. The coolant inlet point **7** could in other embodiments be arranged opposite to the coolant channel inlet **11** in only one direction with respect to the bottom of the enclosure **4.**

As is illustrated by the plurality of arrows in **FIG. 3****,** this arrangement allows the two separate coolants **9, 13** to move in opposite directions towards each other, and generally orthogonally to each other, thus compensating for the successively decreased cooling effect of the coolants due to heat exchange with the battery cells. As the first coolant **9** approaches the outlet conduit **16** its reduced cooling effect is thus compensated by the cooling effect of second coolant **13** supplied at the coolant channel inlet **11.**

**FIG. 4** illustrates an alternative embodiment of the cooling arrangement **1.** **FIG. 4** schematically illustrates the flow of the first coolant **9** and the second coolant **13** within the cooling arrangement **1,** the flows of the first coolant **9** and the second coolant **13** being illustrated with arrows. The first coolant **9** is supplied to the battery cells via the openings **15a-c** of the coolant conduit **15** and is allowed to successively immerse the battery cells **3** until it reaches the first outlet conduit **16.** The second coolant **9** is supplied to the cooling plate **10** through the coolant channel inlet **11** and transported through the coolant channel **14** in thermal contact with the battery cells **3,** until it is disposed through the coolant channel outlet **12.** In **FIG. 4****,** the coolant conduit **15** is arranged at an opposite side of the enclosure **4** with respect to the coolant channel inlet **11** in one horizontal direction, specifically in the left-right direction of **FIG. 4****.** The inlet point **7** of the first coolant **9** is in **FIG. 4** arranged at the same side as the inlet point **7** of the second coolant **9** with regards to the top-bottom direction of **FIG. 4****.** This embodiment might facilitate assembly of the cooling arrangement within a vehicle, as the coolant inlet points are accessible from the same side, it could also allow for the first coolant **9** and the second coolant **13** to be supplied from the same coolant supply.

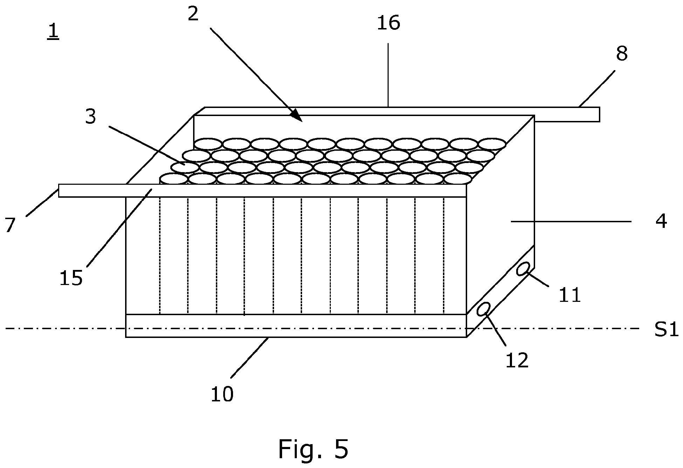

**FIG. 5** is an exemplary cooling arrangement **1** in accordance with an alternative embodiment of the present disclosure. The cooling arrangement **1** is illustrated in relation to an electrical storage system **2.** The electrical storage system **2** comprises a plurality of battery cells **3** for storing of energy in chemical bonds. The battery cells **3** have a cylindrical form and are closely stacked together to form the electrical storage system **2.** The disclosure is not limited to any specific form or number of battery cells **3.** The battery cells **3** are in **FIG. 1** accommodated within an enclosure **4.** The enclosure **4** keeps the battery cells **3** together and protects the battery cells **3.** The enclosure **4** could according to one example comprise polycarbonate.

The cooling arrangement exemplified in **FIG. 5** further comprises a coolant inlet point **7** and a coolant outlet point **8.** The coolant inlet point **7** is connected to an inlet conduit **15** extending along a top side of the enclosure **4** for depositing a first coolant **9** into direct contact with the battery cells **3.** The coolant inlet point **7** is in turn connected to a first coolant supply (not shown).

As the first coolant **9** is supplied to the electrical storage system **2,** it successively immerses the battery cells **3** with the first coolant **9.** As the first coolant **9** reaches the coolant outlet point **8** at a top section of the electrical storage system **2,** the coolant is expelled from the cooling arrangement **1.**

An outlet conduit **16** is connected to the coolant outlet point **8.** As the first coolant **9** reaches a certain level it flows into the outlet conduit **16** whereby it can be transported away from the cooling arrangement **1** through the coolant outlet point **8.**

**FIG. 5** further illustrates a cooling plate **10** arranged at a lower section of the enclosure **4.** The cooling plate **10** comprises a coolant channel inlet **11** and a coolant channel outlet **12.** The inlet **11** and the coolant channel outlet **12** of the are in **FIG. 5** illustrated as being arranged on a same side of the cooling plate **10** but might as well be arranged at different sides. The coolant channel inlet **11** and the coolant channel outlet **12** are connected to external conduits (not shown) for feeding a second coolant **13** into the cooling arrangement **1** and for leading the second coolant **13** away from the cooling arrangement **1.**

The cooling plate **10** could be installed in other ways in relation to the battery cells **3** of the electrical storage system **2,** such as at an upper side of the electrical storage system **2,** on top of the battery cells **3.**

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A cooling arrangement (1) for an electrical storage system (2), the cooling arrangement (1) comprising:
an inlet conduit (15) via which a first coolant (9) is supplied to the cooling arrangement (1) and deposited via one or more openings (15a-c) of the inlet conduit (15) into a cooling arrangement enclosure (4) for setting the first coolant (9) into direct contact with at least one battery cell (3) accommodated within the enclosure (4), the inlet conduit (15) extending along a side of the enclosure (4);
a coolant channel (14) carrying a second coolant (13), the coolant channel (14) being configured to be in thermal contact with the at least one battery cell (3), a coolant channel inlet (11) of the coolant channel (14) being arranged at an opposite side of the enclosure (4) in relation to the inlet conduit (15), wherein
the flow direction of the second coolant (13) at the coolant channel inlet (11) is configured to be orthogonal to a flow direction of the first coolant (9) exiting said one or more openings (15a-c).

2. The cooling arrangement (1) of claim 1 wherein the first coolant (9) is supplied to the inlet conduit (15) at an inlet point (7) being arranged diagonally from the coolant channel inlet (11), with respect to a bottom section of the enclosure (4).

3. The cooling arrangement (1) of claim 1 wherein the first coolant (9) is disposed from the cooling arrangement at a coolant outlet point (8) and the second coolant is disposed from the cooling arrangement at a coolant channel outlet (12).

4. The cooling arrangement (1) of claim 1 wherein the cooling arrangement (1) is configured to immerse the entire at least one battery cell (3) with the first coolant (9).

5. The cooling arrangement (1) of claim 1 wherein the inlet conduit (15) is arranged at a bottom section of the enclosure (4).

6. The cooling arrangement (1) of claim 3 wherein the coolant outlet point (8) is connected to an outlet conduit (16), the outlet conduit (16) extending substantially horizontally along a side of the enclosure (4).

7. The cooling arrangement (1) of claim 6 wherein outlet conduit (16) is arranged at a top section of the enclosure (4).

8. The cooling arrangement (1) of claim 1 wherein the cooling channel (14) comprises a copper tube.

9. The cooling arrangement (1) of claim 1 wherein the coolant channel (14) is arranged inside a cooling plate (10).

10. The cooling arrangement (1) of claim 9 wherein the cooling plate (10) is configured to form a bottom of the enclosure (4).

11. The cooling arrangement (1) of claim 9 wherein the at least one battery cell (3) is affixed to an upper side of the cooling plate (10).

12. The cooling arrangement (1) of claim 1 wherein the first coolant (9) is a dielectric fluid.

13. The cooling arrangement (1) of claim 1 wherein the enclosure (4) comprises polycarbonate.

14. An electrical storage system comprising the cooling arrangement of any of claims 1-13.

15. A vehicle comprising the electrical storage system of claim 14.
